# EUROPEAN PATENT SPECIFICATION

(11) **EP 2 047 544 B1**
(45) Date of publication and mention of the grant of the patent: **23.02.2011**
(21) Application number: 07836351.2
(22) Date of filing: 30.07.2007
(51) Int. Cl.: H01M 2/22

(54) **NAIL-TYPE CURRENT COLLECTOR WITH NON-CONDUCTIVE CORE AND SURFACE METALLIZATION FOR ELECTROCHEMICAL CELL**
STROMSAMMLER IN FORM EINES NAGELS MIT NICHT LEITENDEM KERN UND OBERFLÄCHENMETALLISIERUNG FÜR EINE ELEKTROCHEMISCHE ZELLE
COLLECTEUR DE COURANT EN FORME DE CLOU POUR CELLULE ÉLECTROCHIMIQUE PRÉSENTANT UNE PARTIE CENTRALE NON CONDUCTRICE ET UNE MÉTALLISATION DE SURFACE

(30) Priority: 31.07.2006 US 496679
(43) Date of publication of application: 15.04.2009
(73) Proprietor: Eveready Battery Company, Inc., St Louis, Missouri 63141 (US)
(72) Inventor: CUI, Ning, Lyndhurst, OH 44124 (US); LISOWSKI, Dawn Marie, Cleveland, OH 44111 (US)
(74) Representative: von Kreisler Selting Werner
(86) International application number: PCT/US2007/017032
(87) International publication number: WO 2008/016568

(56) References cited:
- WO-A-93/12552
- JP-A- 62 126 548
- US-A- 4 942 101

## Description

### BACKGROUND AND FIELD OF INVENTION

The present invention relates to electrochemical cells, particularly to a current collector for a cell that forms an electrically conductive path between a cell electrode and a terminal of the cell. The invention also relates to a seal assembly including the current collector and a seal for sealing the open end of a cell container and for venting gasses when exposed to excessive pressure. In a preferred embodiment, the cell is an alkaline cell and the current collector electrically connects the cell negative electrode to a negative terminal. Methods for preparing a current collector are disclosed.

Conventional alkaline electrochemical cells generally include a steel cylindrical can having a positive electrode, referred to as the cathode, which commonly comprises manganese dioxide as the active material. The electrochemical cell also includes a negative electrode, referred to as the anode, which commonly comprises zinc powder as the active material. In bobbin-type or nail-type cells, the cathode is typically formed against the interior surface of the steel can, while the anode is generally centrally disposed in the can. A separator is located between the anode and the cathode, and an alkaline electrolyte solution simultaneously contacts the anode, the cathode, and the separator. A conductive current collector is inserted into the anode active material to provide an electrical path to a negative outer terminal. An annular polymeric (e.g., nylon) seal provides closure to the open end of the steel can to seal the active electrochemical materials in the sealed volume of the can. An inner cover radially supports the seal. The current collector, inner cover, and seal are typically assembled together to form a seal assembly.

The current collector must be conductive and provide an electrical path to a terminal. Accordingly, most battery manufacturers today rely upon current collectors made from metal or metal alloys, such as copper or brass. Usually, these metallic collectors have been plated with additional conductive materials. Ultimately, the material chosen for the current collector must exhibit adequate conductivity, minimize gassing, possess adequate durability to maximize shelf life of the cell and sufficient durability and non-reactivity when exposed to other internal components of the cell, such as the anode gel and the alkaline electrolyte.

However, previous metal and metal alloy current collectors suffer from numerous drawbacks. High costs for materials such as copper, have increased overall manufacturing costs for battery manufacturers. Moreover, solid metal and metal alloy parts tend to add unwanted weight to the overall cell. Lastly, metal current collectors perform poorly, in terms of gassing and leakage, as the cell is discharged and particularly under deep discharge conditions. Thus, various approaches have been taken to create a current collector with improved performance and reduced corrosion.

U.S. Patent No. 6,783,895 to Imai et al. teaches a hydrophilic collector for alkaline secondary batteries formed of a nonwoven fabric plated with nickel. The nickel plated nonwoven fabric is hydrophilized by sulfonation, a gaseous fluorine treatment, or vinyl monomer grafting, and a method for making the collector by hydrophilizing a nonwoven fabric having polyolefin and polyamide fibers, followed by nickel plating, is disclosed. However, the collector disclosed expressly facilitates assembly of secondary batteries wherein porosity of the nickel plate is necessary to allow for increased cell capacity, and the nonwoven fabric has a plurality of micropores extending from one surface to the other surface thereof.

U.S. Patent No. 5,423,974 to St-Amant et al. discloses a scheme to metallize at least one face of a plastic film under vacuum followed by electrochemical plating to provide a uniform, electrically conductive material. The thin metallic sheet obtained is adherent to and supported by the plastic film, which find use as, *inter alia,* current collectors for polymer electrolyte lithium batteries. However, this approach requires multiple, complex manufacturing steps, including the use of a vacuum.

Japanese Patent No. 63108666 to Toshiba Battery Co. teaches reducing deterioration in electric performance caused by the corrosion in a current collector. Specifically, the surface of a conductive plastic which is in contact with the positive electrode is coated with carbon-based conductive paint.

Japanese Patent No. 62126548 to Toshiba Battery Co. relates to use of a conductive plastic as a cathode current collector. Specifically, a thin metal layer is formed in the center of one side of the collector, and a cathode lead is then connected to this metal layer.

In view of the foregoing, a current collector and combination current collector assembly design suited for use in a bobbin-type cell would be welcomed. More specifically, a rod-shaped collector manufactured according to simple procedures and made from light-weight and inexpensive materials is needed.

### SUMMARY OF INVENTION

In view of the above considerations, it is an object of an embodiment of the present invention to provide an electrochemical cell having a current collector that is cost effective to manufacture, relies upon inexpensive materials and exhibits satisfactory electrical performance. Such a current collector should have a non-conductive core and a conductive surface layer, particularly a polymer core with metal deposited on the surface thereof.

Another object of an embodiment of the present invention is to provide a rod-shaped negative electrode current collector that is relatively light in weight, electrically conductive, compatible with materials used to form the negative electrode, has a high hydrogen overpotential so as to reduce generation of hydrogen gas in cell, thereby increasing product reliability.

A further object of an embodiment of the present invention is to provide a current collector assembly for an electrochemical cell including a seal or gasket adapted to be disposed in an open end of a container of an electrochemical cell wherein a current collector extends through an opening in the seal member and a non-welded electrical connection to the positive or negative terminal of the cell.

Yet another object of an embodiment of the invention is to provide an electrochemical cell having a composite current collector with a non-conductive core and a conductive, metal surface layer, wherein the cell exhibits service results that are comparable with the service results of a control cell having a metal current collector.

Notably, the invention is expected to have particular applicability for electrochemical cells employing a bobbin-type design, especially those in standard cell sizes (such as AAA, AA, C or D) and those that utilize an alkaline electrolyte. However, it should be noted that the aforementioned objects are merely exemplary, and those skilled in the art will readily appreciate the numerous advantages and alternatives that can be incorporated according to the following description of embodiments and all the various derivatives and equivalents thereof, all of which are expressly contemplated as part of this disclosure.

Accordingly, an electrochemical cell meeting or exceeding these objectives, as well as others, includes an alkaline electrolyte, an anode and a cathode all disposed within a container. A rod-shaped current collector is then placed in electrical contact with the anode or the cathode, and sealed within the cell container. A gasket or seal may be used. The rod-shaped current collector is made from a non-conductive core material, preferably at least one polymer, and a non-carbonaceous conductive material, preferably copper, tin, zinc and/or combinations or alloys thereof, is deposited on the outermost surface of the core.

A current collector assembly is also described. The collector assembly includes a non-conductive seal hub. Ideally, this seal hub will be a gasket sized to fit the open end of an electrochemical cell container. A rod-shaped current collector penetrates the gasket to permit conduction of current therethrough. The current collector possesses a non-conductive core, preferably made from at least one polymer. The collector is then coated with a non-carbonaceous conductive material, such as copper, tin or zinc.

Lastly, a method of manufacturing an electrochemical cell is described. A non-conductive core is formed from at least one polymer. A non-carbonaceous conductive material is then deposited on the core, preferably by way of electroless plating. An alkaline electrolyte, an anode and a cathode are then provided to an appropriate container. The plated core is then inserted, possibly in conjunction with and through a sealing gasket, so as to maintain electrical contact between the container and the anode or cathode. The resulting cell is then sealed.

These and other features, advantages and objects of the present invention will be further understood and appreciated by those skilled in the art by reference to the following specification, claims and appended drawings.

### BRIEF DESCRIPTION OF DRAWINGS

The invention can be understood with reference to the following drawings. The components in the drawings are not necessarily to scale. Also, in the drawings, like reference numerals designate corresponding parts throughout the several views. In particular:
FIGs. 1a and 1b are, respectively speaking, vertical cross-sectional views through one embodiment of the rod-shaped current collector and the step-shaped current collector;
FIG. 2 is an exploded view through line A-A defined in FIG. 1 illustrating one embodiment of the possible conductive coating layers;
FIG. 3 is a graph demonstrating the optimal thickness for a conductive coating according to one embodiment of the invention against performance of a conventional cell for 400 mA and 1000 mA continuous drain tests.
FIG. 4 is a longitudinal cross-sectional view of one embodiment of an electrochemical cell having a current collector assembly according to one embodiment of the present invention;
FIG. 5 is a side elevational view of a current collector assembly for an electrochemical cell according to one embodiment of the present invention; and
FIG. 6A is a side elevational view of a current collector assembly for an electrochemical cell according to another one embodiment of the present invention, and FIGs. 6B and 6C are top views of current collector heads illustrating one embodiment of a mated junction to maintain electrical contact between the container or contact terminal and the current collector assembly.
FIGs. 7-9 are, respectively speaking, graphical representations of data connected to Examples 1-3.

### DETAILED DESCRIPTION OF THE INVENTION

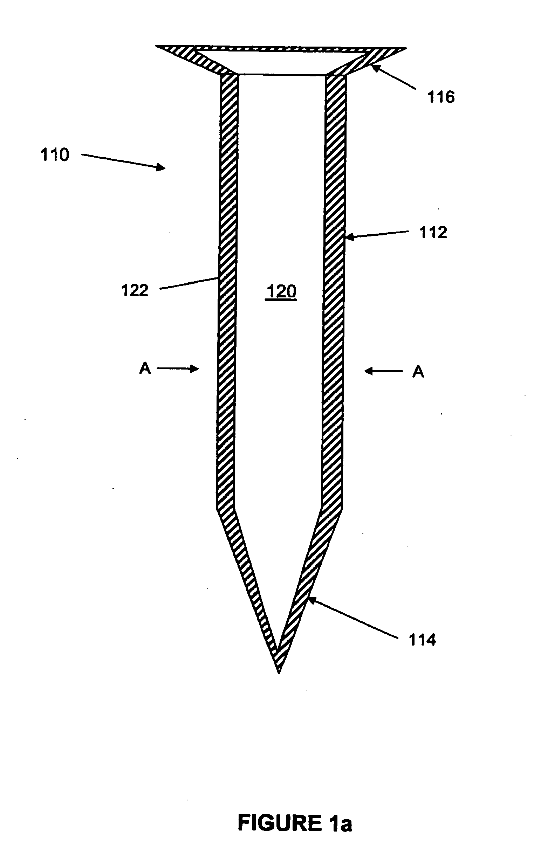

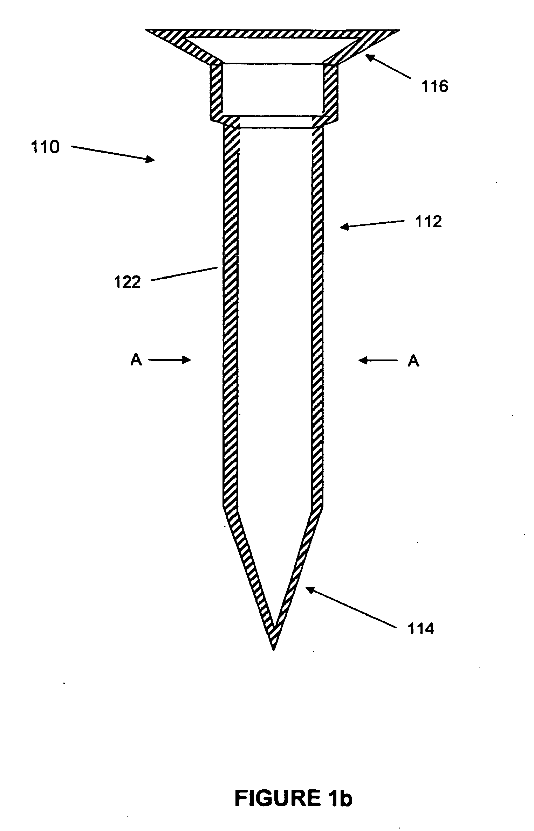

Referring now to the drawings, wherein the final two digits of the reference numerals refer to components or elements that are common to all the figures, FIG. 1 illustrates one embodiment of a current collector 110 of the present invention. Current collector 110 is adapted to provide a conductive path from a positive or negative electrode operatively to a terminal or cover of an electrochemical cell, which may be integrated with the container in some electrochemical cell designs. Current collector 110 is preferably utilized in a primary alkaline-type electrochemical cell and serves to operatively provide an electrical current path from a negative electrode to a negative terminal of the cell or another conductive member operatively electrically connected to the negative terminal.

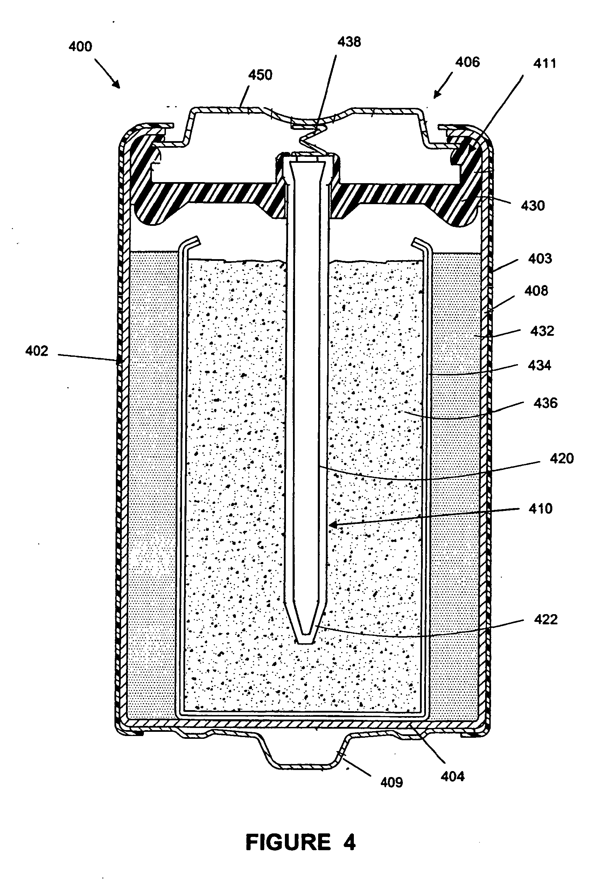

Current collector 110 is an elongated member in the shape of a rod, suitable for use in bobbin-type electrochemical cell designs. The rod may be a cylinder, preferably having a nail shape with a conical terminus on one end and an expanded flattened head on the opposing end. The cylinder may be of varied diameter (*i.e.* stepped and/or tapered) or uniform diameter *(i.e.,* constant diameter or non-tapered). Other tubular shapes, aside from cylinders are also possible. By way of example rather than limitation, such shapes include triangular, square/rectangular or polygonal shape tubes having (respectively speaking) three, four or multiple essentially flat sides. Combinations incorporating one or more flat sides in conjunction with one or more curved sides are also possible. In each instance, the shape may be tapered or non-tapered and may incorporate a conical tip and/or a flattened head. Notably, tip can have generally any design and can, for example, have a conical end (as shown in FIGs. 1a and 1b), a truncated conical end (as shown in FIG. 4), a blunted end or the like.

As seen in FIG. 1a, current collector 110 necessarily includes a shaft 112. In a preferred embodiment, shaft 112 has a substantially constant outer diameter and a conical end 114 is provided. Notably, the shaft must be of sufficient axial length to efficiently collect current from the electrode in contact with collector 110. In FIG. 1b, the shaft 112 has a stepped-outer diameter and a conical end. Here again, the shaft must be of sufficient axial length and diameter to efficiently collect current.

In both FIGs. 1a and 1b, the upper end of current collector 110 includes a head 116, which has an enlarged diameter but substantially smaller axial length as compared to shaft 112, so as to simplify manufacture of the current collector assembly designed below. That is, head 116 is generally larger in size than shaft 112 in order to maintain the current collector 110 in a desired position within a cell. Head 116 can have an outer surface that tapers along all or a part of the axial length thereof, measured in relation to the central axis of the current collector 110. The head 116 also tapers radially outward from where head 116 connects to shaft 112 to the upper end thereof, and the radial diameter may optimally match the radial diameter of the shaft 112 (e.g., circular, polygonal, irregular, etc.).

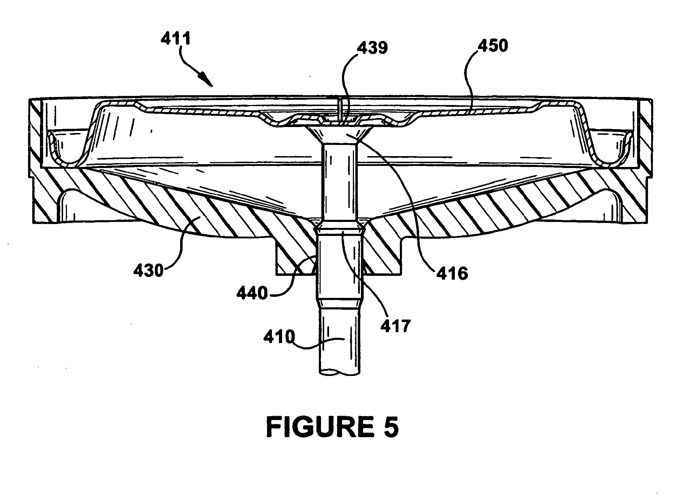

Other head designs can be free of a taper, or the head may include multiple radially offset segments forming one or more nubs near the end of the shaft in addition to or in place of the flattened terminus described above. These nubs may be sized to cooperate with a seal hub or gasket to hold the collector 110 in place. For example, with reference to FIG. 5, radial nub 417 works in conjunction with head 416 to securely hold the collector 410 in place inside of seal hub or gasket 430. Alternatively, such a radial nub can also be integrally provided as part of a stepped portion as contemplated in FIG. 1b.

Current collector 110 must be of a composite structure having at least two different layers, namely at least one conductive, non-carbonaceous layer 122 situated partially, if not completely, over a non-conductive core 120, preferably crafted from one or more polymers. Core 120 may be formed from a polymer or copolymer system via injection molding, thermoforming, extruding or other appropriate known methods. Core 120 should be solid and non-porous, although the surface need not be completely smooth. In fact, surface variations or roughness, including dimples, stippling, or the like, may be preferable in certain circumstances. Significantly, the core 120 must not be fabric, sheet, or film, whether woven or non-woven, as such sheets are easily included with the manufacturing processes contemplated for the bobbin-type cells contemplated herein. Core 120 provides the desired base structure for current collector 110 to which the non-carbonaceous conductive layer 122 is then applied.

Core 120 provides desirable strength, stiffness and impact resistance properties, in addition to being light in weight and cost effective by volume when compared to prior art metal current collectors, such as made from brass. The nonconductive material should also be chosen to have a low coefficient of thermal expansion and resistance to the alkaline electrolyte utilized in the cell.

As described hereinabove, the non-conductive core 120 is a polymer or copolymer that is/are either thermoplastic or thermosetting, with a synthetic thermoplastic polymer or copolymer being preferred. Examples for core layer 120 include, but are not limited to, acrylonitrile-butadiene-styrene copolymers (ABS), acetal resins (such as Delrin®), acrylic resins (such as nylon), fluorocarbon resins, epoxy resins, polyamide resins, liquid crystal polymers, polyphenyl oxides, polyphenyl sulfides, polyimides, polyether imides, polyvinyl chlorides, polyurethanes, polysulfones, polyolefins, polystyrenes, polyesters, polypropylenes, polyethylenes, polycarbonates and combinations thereof, as appropriate, optionally utilizing compatibilizers as known in the art. Plating grade ABS plastic, available from Diamond Polymers, Inc. at 1353 Exeter Road in Akron, Ohio, is preferred in forming core 120 in one embodiment of the present invention because of its superior surface finishing and adhesiveness to conductive layer 122.

As known to one of ordinary skill in the art, (co)polymers of the core layer can include various additives, fillers, or the like with filler examples including ceramic powders, glass spheres, wood flower, and sand. Other additives include, but are not limited to, stabilizers, plasticizers, lubricants, colorants, flame retardants, antioxidants, antistatics, preservatives, processing aids, smoke suppressants, and impact modifiers. As indicated, the core 120 is essentially free of any conductive components.

Core 120 can be fabricated utilizing a suitable device such as an injection molding device, thermoformer, or extruder. The most prevalent method for providing thermoplastic parts is injection molding, which is preferred in the present invention. Specifically, ABS resin needs to be dried to a level of 0.1% or less prior to molding, which is generally performed at 80° - 85°C in a desiccant dryer for 2 - 4 hours. ABS can be injected molded at the following preferred conditions: barrel temperature in the range of 220° - 250°C, mold temperature between 40° - 80°C, injection pressure ranging between 700-1100 psi and slower injection speed

After the non-conductive core 120 has been formed into a desired shape, a conductive surface layer 122 is applied thereto, preferably forming a metallized layer on the surface of core 120. While conductive layer 122 can be applied to only a portion of the surface of core 120, the conductive layer 122 coverage on core 120 is generally selected to insure collector 110 is capable of handling all current flowing in the cell, and preferably 100% coverage of the core 120 is accomplished.

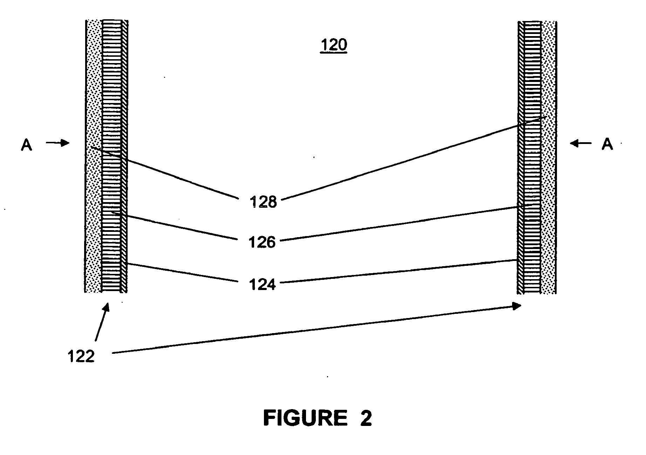

Conductive layer 122 comprises of one or more individual layers 124, 126, 128 that can be the same or different, as generally seen in FIG 2. Conductive layer 122 can be formed on core 120 using a process such as electroless plating, chemical plating, electroplating, vacuum deposition or combinations thereof. In a preferred embodiment, electroless plating followed by electroplating is utilized to form a plurality of conductive layers on core 120, wherein the layers may be the same or different materials. For example, the preferred conductive layer 124 comprises a layer of copper, provided at a thickness of at least 1.5 µm and more preferably at least 6.0 µm, with the copper provided by way of electroless plating followed by further electroplating of additional copper in layer 126. Other metal(s) then can be applied to collectively form conductive layer 128, including but are not limited to, copper, tin, zinc, indium, cadmium, lead and combinations and/or alloys thereof. Notably, non-carbonaceous materials are best suited for the objects and methods of this invention. Furthermore, it is believed the plating methods disclosed herein provide better adhesion of the metal to the non-conductive core as compared to previously known methods relying on carbon-based paints and the like.

The electroless plating step is accomplished without the use of electricity. The non-conductive core, such as an injected molded ABS nail sized for D cell, is placed in a bath solution including a reducing agent, such as 10 ml/L of formaldehyde, and the desired metal(s) in ionic form, such as 5g/L of Copper sulfate. Electrons from the reducing agent work to deposit the metal ions onto the ABS nail in the presence of a catalyst, such as platinum. Use of other components such as complexing agents, pH modifying agents, buffers, stabilizers, etc. may further assist in the process. This process may be repeated multiple times in order to create multiple layers of deposited material. In such cases, deionized water can be used to rinse the part between platings, and the final plated nail should be dried prior to assembly of the electrochemical cell.

Prior to electroless plating, the core 120 can undergo numerous pretreatment processes, including but not limited to: cleaning, etching, neutralizing and activating. Additionally, to insure a satisfactory bond between the deposited metal/metal alloy 122 and the core 120, core 120 should be rinsed with deionized water or other suitable solvents between plating/conductive material deposition. Finally, the final collector 110 should be dried prior to use in the electrochemical cell.

The resulting plated rod will have a slightly rougher surface than the original core. For example, with copper electroless plated on an ABS core, the surface roughness may be anywhere from two to three times greater than either the ABS core alone or a typical brass nail (note that the ABS core and the brass nail have approximately the same surface roughness). Generally, the roughness tends to decrease as the thickness of the plating increases, as seen in Table 1 below.

**TABLE 1. SURFACE ROUGHNESS MEASUREMENTS**

| | |
|---|---|
| Brass nail | 0.25 µm |
| ABS core (no plating) | 0.27 µm |
| 1.5 µm thick Cu electroless plating | 0.86 µm |
| 4.3 µm thick Cu electroless/electroplated comb. | 0.68 µm |
| 7.5 µm thick Cu electroless/electroplated comb. | 0.60 µm |

FIG. 2 illustrates a cross section taken along line A-A from FIG. 1. Collector 110 having multiple layers of conductive material 124, 126, 128 deposited thereon. In one embodiment, a copper layer 126 is plated over a copper electroless layer 124, with a final layer 128 of a metal such as indium or tin plating on the outermost surface. The electrolytic plating can be performed utilizing a barrel plating device such as a lab scale barrel plater available from Sterling Systems at 3745 Stern Ave. in St. Charles, Illinois, or a vibrating device.

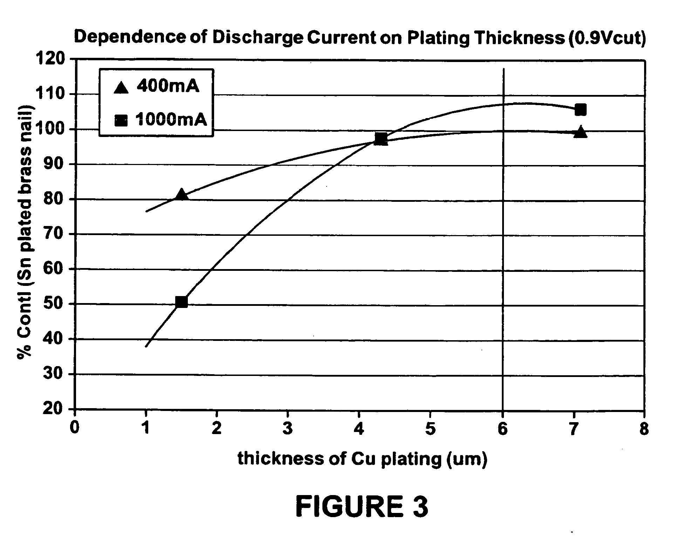

FIG. 3 shows experimental results for electrochemical cells made according to a preferred embodiment of the invention. Copper plating was provided to an ABS rod which was then incorporated into a C-sized battery. Additional control cells were made using a conventional brass nail, and the cells were service tested at a continuous 400 mA and 1000 mA drain rates. As indicated by the two curves, a point of diminishing returns (in terms of performance) seems to be achieved at plating thicknesses in excess of 6 µm.

Current collectors of the present invention can be utilized in generally any electrochemical cell where needed, and are preferably utilized in any cylindrical alkaline electrochemical cells. Typical processes, constructions and materials for such cells are well known in the art. Accordingly, exemplary U.S. Patents 6,528,210; 6,589,693; 6,670,073; and 6,828,061, all commonly assigned to the Eveready Battery Company are incorporated herein by reference for their teachings regarding such processes, constructions and materials.

A cylindrical alkaline electrochemical cell 400 is shown in FIG. 4 having a current collector 410 according to one embodiment of the present invention. Electrochemical cell 400 includes a cylindrical steel can 402 having a closed bottom end 404, an open top end 406, and a cylindrical axial side walls 408 extending there between. The closed bottom end 404 of can 402 has a positive cover welded or otherwise attached thereto and formed of plated steel, with a protruding contact terminal 409 at its center region. Assembled to the open top end 406 of steel can 402 is the current collector 410 and a collector assembly 411, and an outer negative cover 450, preferably formed of plated steel, which forms the negative contact terminal of cell 400. While a negative cover is contemplated in this example, it is possible to reverse the polarity of the cell (thereby imparting a positive polarity to cover 450, along with corresponding rearrangement of the electrodes) without departing from the principles disclosed herein.

A metallized, plastic film label 403 is formed about the exterior surface of steel can 402, except for the ends of steel can 404, 406. Film label 403 is formed over the peripheral edge of the positive cover and may extend partially over the peripheral edge of the negative cover 450.

A positive electrode 432, also referred to herein as the cathode, is formed about the interior surface of steel can 402. According to one example, the cathode 432 is formed of a mixture of manganese dioxide, graphite, potassium hydroxide solution, and additives. A separator 434, which is preferably formed of a non-woven fabric that prevents migration of any solid particles in the cell, is disposed about the interior surface of cathode 432. A negative electrode 436, also referred to herein as the anode 436, is disposed with an electrolyte inside the separator 434 and in contact with a current collector 410. The electrolyte may include an alkaline electrolyte containing aqueous potassium hydroxide (KOH). According to one example, the anode 436 is formed of zinc powder, a gelling agent, and additives. The manganese dioxide and zinc employed in the cathode 432 and anode 436, respectively, are electrochemically active materials. Accordingly, the cathode 432 is configured as the cell's positive electrode, and the anode 436 is configured as the cell's negative electrode.

The current collector 410 contacts the outer negative cover 450 which forms the negative contact terminal of cell 400. The elongated shaft is disposed in contact with the anode 436 and, in this embodiment, has a substantially uniform diameter. The current collector 410 is connected to the outer negative terminal 450 via a compressible coiled conductive connector 438 or other known means. The coiled connector 438 may be welded to the bottom surface of outer negative cover 450 and/or to the upper surface of enlarged head of current collector 410 or alternately may be held in contact therewith via pressure contact. Current collector 410 and connector 438 serve as an electrical current path to provide the negative polarity at the outer negative cover 450.

An annular polymeric seal 430 is disposed in the open end of steel can 402 to prevent leakage of electrochemically active cell materials contained in steel can 402. Polymeric seal 430 may comprise a synthetic thermoplastic resin such as nylon. Alternate materials for seal 430 may include polypropylene, such as NORYL^{®} Extend which is commercially available from General Electric Company, and other materials that would be recognized as suitable for seal 430.

Seal 430 has a central hub with an inner upstanding cylindrical wall defining a central opening (i.e., aperture) for receiving the current collector 410. Hub is generally defined as the central portion of seal 430 containing upstanding wall which is compressed against the current collector 410. The enlarged head of current collector 410 is generally oversized for the hub opening, and thus the seal 430 is compressed against the current collector 410 to form an interference fit engagement with the inner upstanding wall defining the hub opening. The upstanding wall is configured to seal in the enlarged head of current collector 410 when in a sealed (non-vented) position and/or any radial nubs (not shown) that may be provided along the shaft of collector 410. The central hub also has an upper edge formed over the upper peripheral surface of enlarged head of collector 410 to further resist upward movement of current collector 410. An inner cover, which is preferably formed of a rigid metal, is provided to increase the rigidity and support the radial compression of annular seal 140, thereby improving the sealing effectiveness. The inner cover is configured to contact an outer upstanding wall of central hub and an upstanding wall at the outer peripheral section of seal 430. While an oversized current collector 410 and an inner cover are used to compress the seal 430 against the current collector 410, other compression techniques such as compression rings may be employed to provide a sealed interference fit engagement between the current collector 410 and seal 430. The seal 430, inner cover, and outer negative cover 450 provide a low profile closure to the open end 406 of can 402. In addition, the outer negative cover 450 also includes one or more vent openings (not shown) that serve to expose the non-sealed volume of cell 400 to the surrounding outside atmosphere. Vent openings serve to vent pressure build-up released from within the cell 400 to the outside atmosphere once the collector and seal assembly vents.

Together, the current collector 410, annular seal 430, and inner cover, if present, form the collector and seal assembly 411 which may be assembled together and inserted as a unit into the open end 406 of steel can 402. The assembly of the collector and seal assembly 411 and closure of the open end 406 of can 402 include disposing the annular polymeric seal 430 in the open end 406 of the can 402, which may have a flared opening or a bead formed radially inward on the inner wall of the can 402, and crimping the upper end of the can 402 inwardly and over the outer periphery of the seal 430 to compress the seal 430 against the inner cover. It should also be appreciated that the outer negative cover 450 is electrically insulated from the steel can 402 by way of annular polymeric seal 430.

According to the present invention, the current collector and seal assembly 411 seals closed the open end 406 of can 402, provides an electrical current path to the outer negative terminal 450, and further acts a pressure relief mechanism when exposed to an excessive pressure differential. The collector and seal assembly 411 is designed to release pressurized gases from within the sealed active volume of cell 400 when the assembly 411 is exposed to a predetermined pressure differential. The pressure differential is the difference between the internal pressure below the seal 430 and the atmospheric pressure above it. The pressurized gas venting is generally achieved by relative axial (i.e., parallel to a longitudinal axis of the current collector 410) movement between the current collector 410 and annular polymeric seal 430. The pressurized gases released from the internal volume exit cell 400 via openings (not shown) provided in the outer negative cover 450.

Examples of suitable seal assemblies are further set forth in U.S. Patent Nos. 6,855,454 and 6,312,850, herein incorporated by reference. Other similar seals and vents can also be utilized with the current collector of the present invention.

A further embodiment of a seal assembly 411 including a current collector 410 of the present invention is set forth in FIG. 5. In the particular arrangement shown, seal assembly 411 includes a seal 430, formed of a material such as described hereinabove, preferably nylon. A current collector 410 of the present invention having a non-conductive core and a conductive outer surface such as described hereinabove, has a head portion 416 that extends through an orifice in seal 430. In a preferred embodiment, an adhesive 440 such as Swift Adhesive # 82996, or other similar blends, may be used to perfect the seal between current collector 410 to seal hub 430.

A portion of head 416 extends above seal 430 for appropriate connection to terminal 450 or another suitable contact terminal. Seal 430 preferably includes one or more thinned portions so as to allow for a venting mechanism.

In yet a further embodiment, the current collector of the present invention is provided with a head or other portion having a mated junction or connection to the cover, such as a connector of a negative cover of an electrochemical cell. Such a mated junction allows greater contact area between the connector and current collector relative to the connection show in FIGs. 4 and 5 (wherein, respectively speaking, a non-welded connector 438 or a simple welded contact is utilized). Use of a mated junction instead of a fixed connection, such as welding, allows for more streamline and cost effective manufacturing processes insofar as a step can be eliminated. A mated junction will also increase contact surface area to prevent current from "burning through" or "punching through" the conductive plated layer on the surface of the current collector of the present invention. Such burning through is believed to occur because the concentrated flow of current over a small contact point can lead to resistive heating. In some cases, burn through can lead to disconnection of the circuit and failure of the cell.

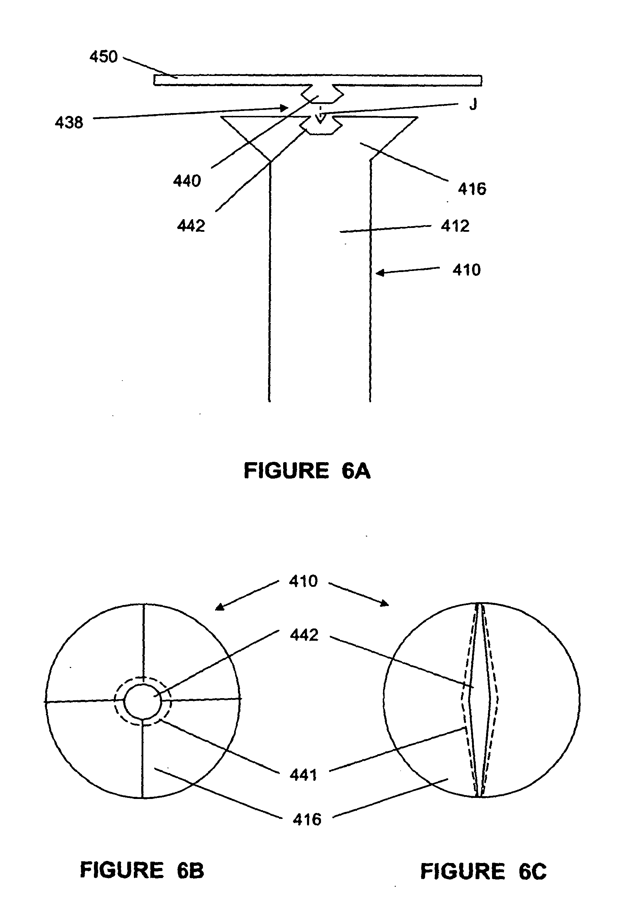

One possible embodiment for a mated junction is shown in FIG. 6A. The high surface area contact is attained by providing for a mated connection, press-fit as illustrated by arrow J. Connector 438 comprises of a projection 440 on negative cover 450 which mates with recess 442 in head 416 of current collector 410. Projection 440 in this case has a polygon-like shape, although any shape which allows for an interference fit could be utilized. Recess 442 is complimentary in shape to projection 440, allowing negative cover 450 to be press-fit into head 416 to form a mated junction. In a preferred embodiment, projection 440 has a hexagonal vertical (or axial relative to the cylinder of shaft 412) cross section and an essentially circular horizontal (or radial relative to the cylinder of shaft 412) cross section. This mated junction design could also be inverted so that the components and/or orientation of the above referenced elements could be interchanged.

FIG. 6B further illustrates a top view of an embodiment of a mated junction contemplated in FIG. 6A, but without illustrating negative cover 450. In FIG. 6B, recess 442 has a substantially cylindrical horizontal cross-section, wherein the diameter of the cross-section can vary along the height of the recess 442. FIG. 6B illustrates an example of a projection having an oval or circular horizontal/radial cross sectional shape (not shown in FIG. 6B) which fits into a corresponding recess 442 of current collector 410. The depth of the recess 442 must cooperate with the projection, although the three dimensional shape of projection 440 need not be regular or uniform (e.g., the projection/recess pairing can have a flat, sloped, curved, rounded and/or irregular bottom/top surface). Note that broken line 441 may represent the cross sectional diameter of the shaft 412. Alternatively or additionally, broken line 441 may also represent the outermost cross-sectional periphery of the shape used to create the interference press-fit for connector 438.

FIG. 6C illustrates a top view of an alternative embodiment. Here, recess 442 extends along the entire length across the top of head 416. In other embodiments, recess 442 could extend along a length which is less than the entire length of head 416 and/or in more than one direction (e.g., a cross shape, a Y-shape, a U-shape, etc.).

While the current collector has been described herein in connection with a cylindrical-type electrochemical cell, it should be appreciated that the invention concepts are likewise applicable to various other cell configurations including cells employing multiple anodes and multiple current collectors and cells in which the cans and current collectors are electrically connected to the negative and positive electrodes, respectively. Additionally, it should also be appreciated that the collector and seal assemblies described herein may be sealed closed against the steel can using various different can closures. Moreover, the current collector may alternately be configured in a primary or secondary cell.

In addition to reducing material cost and reducing the weight of an electrochemical cell utilized in the current collector of the present invention, the composite design can also reduce cell deep discharge gassing or leakage and, therefore, result in a more reliable cell design. It is known that prior art brass nails are oxidized during deep discharge and that the oxidized nail surface will form a galvanic couple with zinc to accelerate anode gassing. When a zinc plated composite current collector of the present invention is used to replace a brass nail, the zinc plating will be discharged or stripped during the deep discharge process. Consequently, the current collector will change back to an insulator, which will prevent the formation of a galvanic couple between the current collector and the zinc, and, therefore, reduce deep discharge gassing or leaking, or a combination thereof.

### Example 1

The rod-shaped ABS plastic current collector, as shown in Figure 1a, with the dimension of 0.091" in diameter and 1.631" in length was fabricated by injection molding. Plastic current collector was plated with copper by electroless plating and then electrolytic plating. The following pretreatment steps were taken prior to electroless plating. The parts were thoroughly rinsed in water after each following step.
1. Etching - ABS plastic current collector was etched in "chrome-sulfuric" etchant which contains 375 to 450 g/L chromium trioxide and 335 to 360 g/L sulfuric acid. The etching process was operated at 140 to 160°F for 4 - 10 minutes.
2. Neutralizing - Plastic current collector was then put into a neutralizer consisted of 1 to 5% sodium bisulfite to eliminate excess etchant from the part by chemical reduction. Neutralizing process was operated at 92 to 132°F for 1- 4 minutes.
3. Activating - To provide catalytic sites on ABS plastic surface, the activation process was conducted at 40 to 104 °F for 5 to 10 minutes. The activator bath consists of the following: Stannous chloride (10~ 20 g/L of solution), Palladium dichloride (0.2 ~ 0.3 g/L) and Hydrochloric acid (~ 200 mL/L)
4. Accelerating - To render the activating species deposited in the activating step as active as possible, the ABS plastic current collector was immersed in the activating solution consisted 80 to 120 mL/L Hydrochloric acid for 1 to 3 minutes at 95 to 104 °F

Pretreated ABS plastic collector was plated with copper by electroless plating to 1.5 um and then extended to 4.3 and 7.1um by traditional electrolytic copper plating. As same as the brass current collector used, the copper plated ABS plastic collector was also chemically plated 0.02 ~0.08 um tin outside of copper plating.

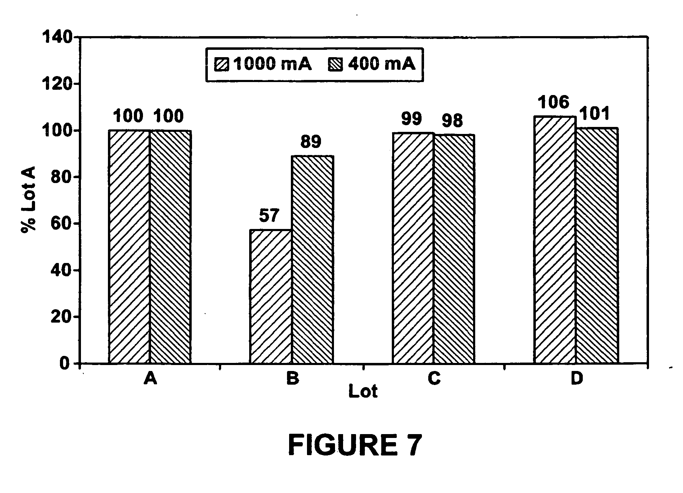

The copper plated ABS current collector was tested in C-size alkaline battery (LR14) and compared with rod-shaped tin plated brass current collector (0.072" in diameter and 1.631" in length). Cells were tested under 400mA and 1000mA continuous discharge to 0.9V cut-off at room temperature. The cell service data are presented in Fig.7. Lot A in Fig.7 stands for the cells with the brass current collector and, the Lots B, C, and D represent the cells constructed with the ABS plastic current collector with 1.5, 4.3 and 7.1um copper plating respectively. The discharge capacity of Lot A was defined as 100% in Fig.7 and the performances of cells from Lots B, C and D were then normalized to the performances of cells in Lot A. The data in Fig.7 demonstrates that the equivalent performance of the brass current collector can be achieved when the copper plating thickness reaches or exceeds 4.3um.

### Example 2

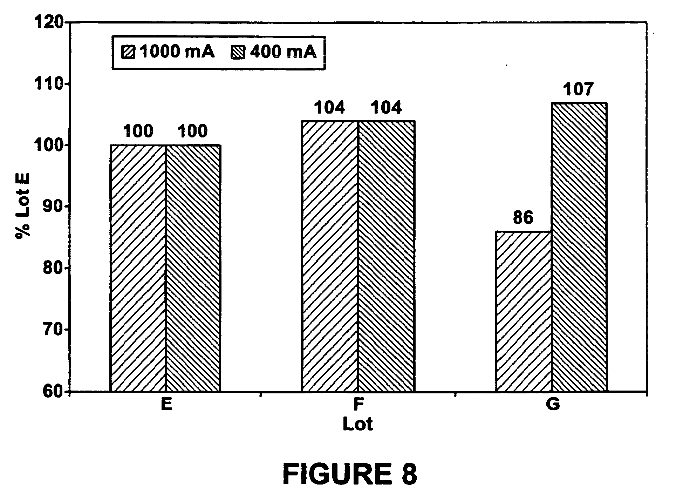

The rod-shaped ABS plastic current collectors shown in Fig.1a were electroless plated with about a 1 um copper film by using the same process mentioned in the example one above. They were subsequently electroplated with copper to 61 um or tin to 23 um respectively. Service evaluation was conducted in the same way as described above and data are summarized in Fig.8. Lot E in Fig. 8 represents the cell constructed using a brass current collector and, the Lots F and G represent the cells constructed using an ABS plastic current collector with 61 um copper plating or 23 um tin plating respectively. For 400mA discharge; both copper plated and tin plated ABS plastic collectors can match or exceed the brass collector on service. For 1000mA, 23 um tin plated ABS collector shows a deficiency. Comparing Fig.7 and Fig.8, one can see that further increasing copper plating from 7.3 to 61 um did not show an apparent benefit for performances.

### Example 3

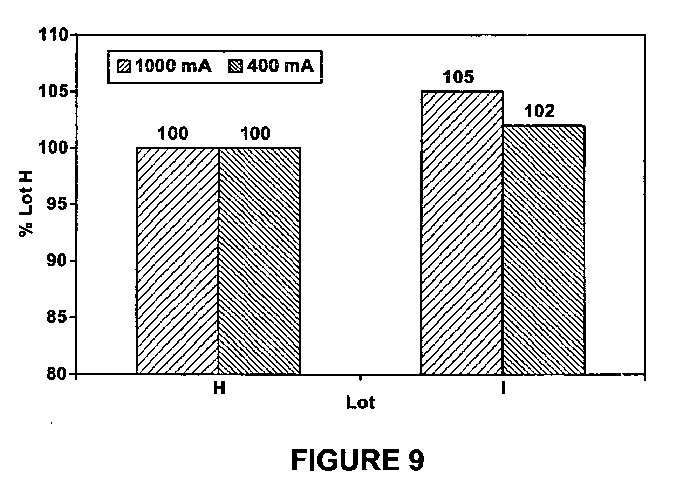

The step-shaped ABS plastic current collector, as shown in Fig.1b, with the dimension of 0.071/0.051" in diameters and 1.597" in length was fabricated by injection molding. The collector was plated with 15.3 um copper plating using the same processes described in the example 1. The service was tested in C-size alkaline battery (LR14) and compared with rod-shaped tin plated brass current collector with the dimension of 0.046" in diameter and 1.597" in length. The Lot H in Fig.9 represents the cell with the brass current collector and Lot I represent the cells constructed with the step-shaped ABS plastic current collector with 15.3 um copper plating. The copper plated step-shaped ABS plastic current collector shows equivalent or better performance than the brass collector.

It will be understood by those who practice the invention and those skilled in the art, that various modifications and improvements may be made to the invention without departing from the spirit of the disclosed concepts. The scope of protection afforded is to be determined by the claims and by the breadth of interpretation allowed by law.

## Claims

1. An electrochemical cell, comprising:
a container having at least one contact terminal;
a positive electrode, a negative electrode, a separator and an electrolyte all disposed within the container; and
a collector, disposed within the container, having a non-conductive core and an essentially non-carbonaceous conductive layer deposited on an outermost surface of the core, said collector making electrical contact between the contact terminal and one of the positive or negative electrodes and said non-carbonaceous conductive layer being chemically compatible with the electrolyte.

2. The electrochemical cell according to claim 1, wherein the elongated member has a shape selected from the group consisting of: a non-tapered cylinder, a stepped cylinder, a tapered cylinder, a non-tapered rod having at least three or more flat essentially sides, a stepped rod having at least three or more flat essentially sides, a tapered rod having at least three or more essentially flat sides, a non-tapered rod having at least one curved side and at least one flat side, a stepped rod having at least one curved side and at least one flat side and a tapered rod having at least one curved side and at least one flat side.

3. The electrochemical cell according to claim 2, wherein the elongated member includes at least one of: a head disposed at a terminal end of the elongated member, a radial nub disposed along an axial portion of the elongated member, a truncated cone disposed at a terminal end of the elongated member, a complete cone disposed at a terminal end of the elongated member and a blunted end disposed at a terminal end of the elongated member.

4. The electrochemical cell according to claim 1, wherein the elongated member is electrically connected to the contact terminal via a non-welded connection.

5. The electrochemical cell according to claim 1, wherein the non-carbonaceous conductive layer is at least 6 µm thick.

6. The electrochemical cell according to claim 1, wherein the elongated member includes at least one of: a head disposed at a terminal end of the elongated member, a radial nub disposed along an axial portion of the elongated member, a truncated cone disposed at a terminal end of the elongated member, a complete cone disposed at a terminal end of the elongated member and a blunted end disposed at a terminal end of the elongated member.

7. The electrochemical cell according to claim 1, further comprising a sealing gasket disposed within the container and wherein the elongated member penetrates the sealing gasket.

8. The electrochemical cell according to claim 1, wherein the outermost surface of the core is completely covered by the conductive layer.

9. A current collector assembly for an electrochemical cell, comprising:
a non-conductive seal hub adapted to form a seal across an open end of a container of an electrochemical cell; and
a current collecting rod extending through the seal hub, said collecting rod having a non-conductive core and a non-carbonaceous conductive coating on at least a portion of the core to conduct electrical current across the seal hub without compromising the seal formed by the seal hub.

10. The current collector assembly according to claim 9, further comprising a sealant disposed between the seal hub and the collecting rod.

11. The current collector assembly according to claim 9, wherein the collecting rod has a shape selected from the group consisting of: a non-tapered cylinder, a tapered cylinder, a stepped cylinder, a non-tapered rod having at least three or more flat essentially sides, a stepped rod having at least three or more flat essentially sides, a tapered rod having at least three or more essentially flat sides, a non-tapered rod having at least one curved side and at least one flat side, a stepped rod having at least one curved side and at least one flat side and a tapered rod having at least one curved side and at least one flat side.

12. The current collector assembly according to claim 9, wherein the core is completely covered by the non-carbonaceous conductive coating.

13. The current collector assembly according to claim 9, wherein the non-carbonaceous conductive coating is at least 6 µm thick.

14. A method for manufacturing an electrochemical cell, comprising the steps of:
forming a non-conductive rod from at least one polymer;
depositing at least one non-carbonaceous material comprising a conductive metal or a conductive metal alloy on an exterior surface of the rod;
selecting an electrolyte that is chemically compatible with the non-carbonaceous material and disposing the electrolyte, an anode and a cathode within a container adapted for use in an electrochemical cell;
disposing the rod within the container proximate to an electrode, said electrode selected from the anode and the cathode, in order to maintain electrical contact between the container and the electrode; and
sealing the electrolyte, the anode, the cathode and the electroless-plated rod within the container to create an electrochemical cell.

15. The method according to claim 14, wherein a seal hub assembly is provided to seal the electrochemical cell and wherein the rod is inserted through the seal hub assembly to carry electrical current therethrough.

## Patentansprüche

1. Elektrochemische Zelle, umfassend:
einen Behälter mit wenigstens einem Kontaktende;
eine positive Elektrode, eine negative Elektrode, einen Separator und einen Elektrolyten, die sich alle innerhalb des Behälters befinden; und
einen Kollektor, der sich innerhalb des Behälters befindet und einen nichtleitfähigen Kern und eine im Wesentlichen nichtkohlenstoffhaltige leitfähige Schicht, die auf einer äußersten Oberfläche des Kerns abgelagert ist, aufweist, wobei der Kollektor einen elektrischen Kontakt zwischen dem Kontaktende und entweder der positiven oder der negativen Elektrode herstellt und die nichtkohlenstoffhaltige leitfähige Schicht chemisch mit dem Elektrolyten verträglich ist.

2. Elektrochemische Zelle gemäß Anspruch 1, wobei der Kollektor eine Form hat, die aus der Gruppe ausgewählt ist, die aus einem sich nicht verjüngenden Zylinder, einem abgestuften Zylinder, einem sich verjüngenden Zylinder, einem sich nicht verjüngenden Stab mit wenigstens drei oder mehr im Wesentlichen flachen Seiten, einem abgestuften Stab mit wenigstens drei oder mehr im Wesentlichen flachen Seiten, einem sich verjüngenden Stab mit wenigstens drei oder mehr im Wesentlichen flachen Seiten, einem sich nicht verjüngenden Stab mit wenigstens einer gekrümmten Seite und wenigstens einer flachen Seite, einem abgestuften Stab mit wenigstens einer gekrümmten Seite und wenigstens einer flachen Seite und einem sich verjüngenden Stab mit wenigstens einer gekrümmten Seite und wenigstens einer flachen Seite besteht.

3. Elektrochemische Zelle gemäß Anspruch 2, wobei der Kollektor wenigstens eines der folgenden Merkmale umfasst: einen Kopf, der sich an einem Ende des Kollektors befindet, eine Radialnoppe, die sich entlang einem axialen Teil des Kollektors befindet, einen Kegelstumpf, der sich an einem Ende des Kollektors befindet, einen vollständigen Kegel, der sich an einem Ende des Kollektors befindet, und ein abgestumpftes Ende, das sich an einem Ende des Kollektors befindet.

4. Elektrochemische Zelle gemäß Anspruch 1, wobei der Kollektor über eine nichtgeschweißte Verbindung elektrisch mit dem Kontaktende verbunden ist.

5. Elektrochemische Zelle gemäß Anspruch 1, wobei die nichtkohlenstoffhaltige leitfähige Schicht wenigstens 6 µm dick ist.

6. Elektrochemische Zelle gemäß Anspruch 1, wobei der Kollektor wenigstens eines der folgenden Merkmale umfasst: einen Kopf, der sich an einem Ende des Kollektors befindet, eine Radialnoppe, die sich entlang einem axialen Teil des Kollektors befindet, einen Kegelstumpf, der sich an einem Ende des Kollektors befindet, einen vollständigen Kegel, der sich an einem Ende des Kollektors befindet, und ein abgestumpftes Ende, das sich an einem Ende des Kollektors befindet.

7. Elektrochemische Zelle gemäß Anspruch 1, die weiterhin einen Dichtungsring umfasst, der sich innerhalb des Behälters befindet, wobei der Kollektor den Dichtungsring durchdringt.

8. Elektrochemische Zelle gemäß Anspruch 1, wobei die äußerste Oberfläche des Kerns vollständig mit der leitfähigen Schicht bedeckt ist.

9. Stromabnehmerbaugruppe für eine elektrochemische Zelle, umfassend:
eine nichtleitfähige Dichtungsnabe, die so angepasst ist, dass sie eine Abdichtung über ein offenes Ende eines Behälters einer elektrochemischen Zelle bildet; und
einen Stromabnehmerstab, der sich durch die Dichtungsnabe hindurch erstreckt, wobei der Stromabnehmerstab einen nichtleitfähigen Kern und eine nichtkohlenstoffhaltige leitfähige Beschichtung auf wenigstens einem Teil des Kerns aufweist, um elektrischen Strom durch die Dichtungsnabe zu leiten, ohne die durch die Dichtungsnabe gebildete Abdichtung zu beeinträchtigen.

10. Stromabnehmerbaugruppe gemäß Anspruch 9, die weiterhin ein Dichtungsmittel umfasst, das sich zwischen der Dichtungsnabe und dem Stromabnehmerstab befindet.

11. Stromabnehmerbaugruppe gemäß Anspruch 9, wobei der Stromabnehmerstab eine Form hat, die aus der Gruppe ausgewählt ist, die aus einem sich nicht verjüngenden Zylinder, einem abgestuften Zylinder, einem sich verjüngenden Zylinder, einem sich nicht verjüngenden Stab mit wenigstens drei oder mehr im Wesentlichen flachen Seiten, einem abgestuften Stab mit wenigstens drei oder mehr im Wesentlichen flachen Seiten, einem sich verjüngenden Stab mit wenigstens drei oder mehr im Wesentlichen flachen Seiten, einem sich nicht verjüngenden Stab mit wenigstens einer gekrümmten Seite und wenigstens einer flachen Seite, einem abgestuften Stab mit wenigstens einer gekrümmten Seite und wenigstens einer flachen Seite und einem sich verjüngenden Stab mit wenigstens einer gekrümmten Seite und wenigstens einer flachen Seite besteht.

12. Stromabnehmerbaugruppe gemäß Anspruch 9, wobei der Kern vollständig mit der nichtkohlenstoffhaltigen leitfähigen Beschichtung bedeckt ist.

13. Stromabnehmerbaugruppe gemäß Anspruch 9, wobei die nichtkohlenstoffhaltige leitfähige Beschichtung wenigstens 6 µm dick ist.

14. Verfahren zur Herstellung einer elektrochemischen Zelle, das die folgenden Schritte umfasst:
Bilden eines nichtleitfähigen Stabs aus wenigstens einem Polymer;
Abscheiden wenigstens eines nichtkohlenstoffhaltigen Materials, das ein leitfähiges Metall oder eine leitfähige Metalllegierung umfasst, auf einer äußeren Oberfläche des Stabs;
Auswählen eines Elektrolyten, der chemisch mit dem nichtkohlenstoffhaltigen Material verträglich ist, und Platzieren des Elektrolyten, einer Anode und einer Kathode innerhalb des Behälters, der zur Verwendung in einer elektrochemischen Zelle geeignet ist;
Platzieren des Stabs innerhalb des Behälters nächst einer Elektrode, wobei die Elektrode aus der Anode und der Kathode ausgewählt ist, um elektrischen Kontakt zwischen dem Behälter und der Elektrode aufrechtzuerhalten; und
Abdichten des Elektrolyten, der Anode, der Kathode und des autophoretisch beschichteten Stabs innerhalb des Behälters unter Bildung einer elektrochemischen Zelle.

15. Verfahren gemäß Anspruch 14, wobei eine Dichtungsnabenbaugruppe bereitgestellt wird, um die elektrochemische Zelle abzudichten, und wobei der Stab durch die Dichtungsnabenbaugruppe gesteckt wird, um elektrischen Strom hindurchzutransportieren.

## Revendications

1. Cellule électrochimique, comprenant::
un conteneur présentant au moins une borne de contact;
une électrode positive, une électrode négative, un séparateur et un électrolyte, tous disposés à l'intérieur du conteneur; et
un collecteur, disposé à l'intérieur du conteneur, comprenant une partie centrale non conductrice et une couche conductrice essentiellement non carbonée déposée sur une surface extérieure extrême de la partie centrale, ledit collecteur établissant un contact électrique entre la borne de contact et soit l'électrode positive, soit l'électrode négative, et ladite couche conductrice non carbonée étant chimiquement compatible avec l'électrolyte.

2. Cellule électrochimique selon la revendication 1, dans laquelle l'élément allongé présente une forme sélectionnée dans le groupe comprenant: un cylindre non conique, un cylindre étagé, un cylindre conique, une tige non conique présentant au moins trois côtés essentiellement plats, ou plus, une tige étagée présentant au moins trois côtés essentiellement plats, ou plus, une tige conique présentant au moins trois côtés essentiellement plats, ou plus, une tige non conique présentant au moins un côté courbe et au moins un côté plat, une tige étagée présentant au moins un côté courbe et au moins un côté plat, et une tige conique présentant au moins un côté courbe et au moins un côté plat.

3. Cellule électrochimique selon la revendication 2, dans laquelle l'élément allongé comprend au moins un composant appartenant au groupe comprenant: une tête disposée à une extrémité terminale de l'élément allongé, une boule radiale disposée le long d'une partie axiale de l'élément allongé, un cône tronqué disposé à une extrémité terminale de l'élément allongé, un cône complet disposé à une extrémité terminale de l'élément allongé, et une extrémité émoussée disposée à une extrémité terminale de l'élément allongé.

4. Cellule électrochimique selon la revendication 1, dans laquelle l'élément allongé est électriquement connecté à la borne de contact par l'intermédiaire d'une connexion non soudée.

5. Cellule électrochimique selon la revendication 1, dans laquelle l'épaisseur de la couche conductrice non carbonée est d'au moins 6 µm.

6. Cellule électrochimique selon la revendication 1, dans laquelle l'élément allongé comprend au moins un composant appartenant au groupe comprenant: une tête disposée à une extrémité terminale de l'élément allongé, une boule radiale disposée le long d'une partie axiale de l'élément allongé, un cône tronqué disposé à une extrémité terminale de l'élément allongé, un cône complet disposé à une extrémité terminale de l'élément allongé, et une extrémité émoussée disposée à une extrémité terminale de l'élément allongé.

7. Cellule électrochimique selon la revendication 1, comprenant en outre une garniture d'étanchéité qui est disposée à l'intérieur du conteneur, et dans laquelle l'élément allongé pénètre dans la garniture d'étanchéité.

8. Cellule électrochimique selon la revendication 1, dans laquelle la surface extérieure extrême de la partie centrale est complètement recouverte par la couche conductrice.

9. Ensemble de collecteur de courtant pour une cellule électrochimique, comprenant:
un anneau d'étanchéité non conducteur adapté pour former un joint en travers d'une extrémité ouverte d'un conteneur d'une cellule électrochimique; et
une tige de collecte de courant qui s'étend à travers l'anneau d'étanchéité, ladite tige de collecte comprenant une partie centrale non conductrice et un revêtement conducteur non carboné sur au moins une partie de la partie centrale de manière à conduire le courant électrique de part et d'autre du anneau d'étanchéité sans compromettre le joint formé par l'anneau d'étanchéité.

10. Ensemble de collecteur de courant selon la revendication 9, comprenant en outre un isolant qui est disposé entre l'anneau d'étanchéité et la tige de collecte.

11. Ensemble de collecteur de courant selon la revendication 9, dans lequel la tige de collecte présente une forme sélectionnée dans le groupe comprenant: un cylindre non conique, un cylindre conique, un cylindre étagé, une tige non conique présentant au moins trois côtés essentiellement plats, ou plus, une tige étagée présentant au moins trois côtés essentiellement plats, ou plus, une tige conique présentant au moins trois côtés essentiellement plats, ou plus, une tige non conique présentant au moins un côté courbe et au moins un côté plat, une tige étagée présentant au moins un côté courbe et au moins un côté plat, et une tige conique présentant au moins un côté courbe et au moins un côté plat.

12. Ensemble de collecteur de courant selon la revendication 9, dans lequel la partie centrale est complètement recouverte par le revêtement conducteur non carboné.

13. Ensemble de collecteur de courant selon la revendication 9, dans lequel l'épaisseur du revêtement conducteur non carboné est d'au moins 6 µm.

14. Procédé pour fabriquer une cellule électrochimique, comprenant les étapes suivantes:
former une tige non conductrice à partir d'au moins un polymère;
déposer au moins un matériau non carboné comprenant un métal conducteur ou un alliage de métal conducteur sur une surface extérieure de la tige;
sélectionner un électrolyte qui est chimiquement compatible avec le matériau non carboné, et disposer l'électrolyte, une anode et
une cathode à l'intérieur d'un conteneur adapté pour être utilisé dans une cellule électrochimique;
disposer la tige à l'intérieur du conteneur à proximité d'une électrode, ladite électrode étant choisie parmi l'anode et la cathode, dans le but de maintenir un contact électrique entre le conteneur et l'électrode; et
isoler l'électrolyte, l'anode, la cathode et la tige à placage autocatalytique à l'intérieur du conteneur de manière à créer une cellule électrochimique.

15. Procédé selon la revendication 14, dans lequel un ensemble d'anneau d'étanchéité est prévu pour isoler la cellule électrochimique, et dans lequel la tige est insérée à travers l'ensemble d'anneau d'étanchéité pour transporter du courant électrique à travers celui-ci.
